# EUROPEAN PATENT SPECIFICATION

(11) **EP 1 617 059 B1**
(45) Date of publication and mention of the grant of the patent: **06.12.2006**
(21) Application number: 05015331.1
(22) Date of filing: 14.07.2005
(51) Int. Cl.: F02D 41/02, F01N 9/00, F02D 41/40

(54) **A particle filter regenration system which compensates for oil burnt in the combustion chamber**
Ein Partikelfilterregenerationssystem, das das im Zylinder verbrannte Öl kompensiert.
Un système de regeneration d'un filtre à particules qui compense d'huile qui est brulé dans dans le cylindre

(30) Priority: 16.07.2004 JP 2004210439
(43) Date of publication of application: 18.01.2006
(73) Proprietor: Toyota Jidosha Kabushiki Kaisha, Toyota-shi, Aichi-ken, 471-8571 (JP)
(72) Inventor: Kogo, Tomoyuki, Toyota-shi Aichi-ken, 471-8571 (JP); Tominaga, Hiroyuki, Toyota-shi Aichi-ken, 471-8571 (JP); Hashizume, Takeshi, Toyota-shi Aichi-ken, 471-8571 (JP)
(74) Representative: TBK-Patent

(56) References cited:
- EP-A- 1 229 223
- EP-A- 1 234 959
- EP-A- 1 437 492
- PATENT ABSTRACTS OF JAPAN vol. 2003, no. 04, 2 April 2003 (2003-04-02) & JP 2002 371900 A (ISUZU MOTORS LTD), 26 December 2002 (2002-12-26)
- PATENT ABSTRACTS OF JAPAN vol. 2003, no. 08, 6 August 2003 (2003-08-06) & JP 2003 120390 A (TOYOTA MOTOR CORP), 23 April 2003 (2003-04-23)

## Description

### 1. Field of the Invention

The invention relates to an exhaust gas control apparatus for an internal combustion engine. More particularly, the invention relates to an exhaust gas control apparatus for an internal combustion engine, which includes a particulate filter that is provided in an exhaust passage of an internal combustion engine, and that captures particulate matter in exhaust gas.

### 2. Description of the Related Art

In an exhaust gas control apparatus for an internal combustion engine, fuel may be supplied to a catalyst that is provided in an exhaust passage by performing sub-fuel injection into a cylinder after main fuel injection is performed, in order to increase a temperature of the catalyst so that an exhaust gas purification ability of the catalyst is recovered.

For example, Japanese Patent Application Publication JP(A) No. 2003-120390 discloses a technology in which, in a case where a NOx catalyst is provided in an exhaust passage of an internal combustion engine and fuel is supplied to the NOx catalyst by performing sub-fuel injection, a delay angle of present sub-fuel injection is increased when a period from last sub-fuel injection until the present sub-fuel injection is longer than a period required for evaporating fuel mixed into engine oil, and the delay angle of the present sub-fuel injection is decreased when the period from the last sub-fuel injection until the present sub-fuel injection is shorter than the period required for evaporating the fuel mixed into engine oil.

Also, Japanese Patent Application Publication No. JP(A) 2001-323835 discloses a technology in which an upper limit of a fuel injection amount at each injection during sub-fuel injection is set to an amount at which dilution of engine oil is not caused by the fuel that is injected during the sub-fuel injection, and that adheres to an inner wall of a cylinder.

In addition, Japanese Patent Application Publication No. JP(A) 2001-234799, Japanese Patent Application Publication No. JP(A) 2001-73856, and Japanese Patent Application Publication No. JP(A) 2002-371900 disclose art related to the invention.

In an exhaust gas control apparatus for an internal combustion engine, which includes a particulate filter (hereinafter, referred to simply as "filter") that is provided in an exhaust passage of an internal combustion engine, and that captures particulate matter in exhaust gas, a catalyst having an oxidizing function such as an oxidation catalyst and a NOx storage reduction catalyst may be provided at a portion upstream of the filter in the exhaust passage, or may be supported by the filter.

In this case, when particulate matter (hereinafter, referred to as "PM") deposited in the filter is oxidized and removed, a filter recovery control is performed. In the filter recovery control, fuel is supplied to the catalyst, and a temperature of the filter is increased by oxidation heat, which is generated when the fuel is oxidized in the catalyst.

In a case where fuel is supplied to a catalyst by performing sub-fuel injection into a cylinder of an internal combustion engine during one combustion cycle (an intake stroke, a compression stroke, an expansion stroke, and an exhaust stroke) after main fuel injection is performed in the filter recovery control, the fuel injected during the sub-fuel injection is likely to adhere to a wall surface of the cylinder. Therefore, an amount of the fuel mixed into engine oil may increase, and dilution of the engine oil may be promoted.

### SUMMARY OF THE INVENTION

In view of the above, it is an object of the invention to provide a technology in which in an exhaust gas control apparatus for an internal combustion engine, which includes a filter provided in an exhaust passage of an internal combustion engine, a filter recovery control for oxidizing and removing PM deposited in the filter can be performed while suppressing dilution of oil caused by fuel.

That is, according to the invention, in an exhaust gas control apparatus for an internal combustion engine, which includes a filter provided in an exhaust passage of an internal combustion engine, in a case where a filter recovery control is performed by performing sub-fuel injection into a cylinder, as a degree of dilution of engine oil increases, at least one of a performing frequency with which the filter recovery control is performed and a performing period during which the filter recovery control is performed is decreased.

An aspect of the invention relates to an exhaust gas control apparatus for an internal combustion engine, including a particulate filter which is provided in an exhaust passage of an internal combustion engine, and which captures particulate matter in exhaust gas; and a catalyst having an oxidizing function which is provided at a portion upstream of the particulate filter in the exhaust passage, or a catalyst having an oxidizing function which is supported by the particulate filter. In the exhaust gas control apparatus, a filter recovery control is performed, in which fuel is supplied to the catalyst by performing sub-fuel injection into a cylinder of the internal combustion engine after main fuel injection is performed, whereby a temperature of the particulate filter is increased, and the particulate matter deposited in the particulate filter is oxidized and removed. Further, in the exhaust gas control apparatus, at least one of a performing frequency with which the filter recovery control is performed and a performing period during which the filter recovery control is performed is changed according to a degree of dilution of engine oil, which is caused by mixing of the fuel into the engine oil.

As the degree of dilution of the engine oil increases, at least one of the performing frequency with which the filter recovery control is performed and the performing period during which the filter recovery control is performed may be decreased.

More specifically, the exhaust gas control apparatus may further include mixed fuel amount estimating means for estimating an amount of the fuel mixed into the engine oil; and as the amount of the fuel mixed into the engine oil that is estimated by the mixed fuel amount estimating means increases, at least one of the performing frequency with which the filter recovery control is performed and the performing period during which the filter recovery control is performed may be decreased.

According to the invention, as the performing frequency with which the filter recovery control is performed is decreased, and as the performing period during which the filter recovery control is performed is decreased, the amount of the fuel that is injected during the sub-fuel injection and adheres to an inner wall surface of the cylinder can be decreased. Thus, it is possible to suppress an increase in the degree of dilution of the engine oil.

Thus, in the aforementioned exhaust gas control apparatus for an internal combustion engine, as the degree of dilution of the engine oil increases, more specifically, the amount of the fuel mixed into the engine oil (hereinafter, referred to as "mixed fuel amount") increases, it is possible to decrease the amount of the fuel that is newly mixed into the engine oil due to the filter recovery control. Accordingly, it is possible to perform the filter recovery control while suppressing dilution of the engine oil caused by the fuel.

Also, when the amount of the fuel mixed into the engine oil that is estimated by the mixed fuel amount estimating means is large, an amount of the fuel injected at each injection during the sub-fuel injection in the filter recovery control may be decreased, as compared to when the amount of the fuel mixed into the engine oil that is estimated by the mixed fuel amount estimating means is small.

As the amount of the fuel injected at each injection during the sub-fuel injection is decreased, the amount of the fuel that is injected during the sub-fuel injection and adheres to the inner wall surface of the cylinder is decreased. Thus, according to the aforementioned control, when the mixed fuel amount is large, the amount of the fuel that is newly mixed into the engine oil due to the filter recovery control can be decreased, as compared to when the mixed fuel amount is small. That is, it is possible to suppress dilution of the engine oil caused by the filter recovery control.

In a case where the catalyst is provided in the exhaust passage, a fuel supply valve that supplies fuel may be provided at a portion upstream of the catalyst in the exhaust passage, and in a case where the catalyst is supported by the filter, the fuel supply valve may be provided at a portion upstream of the filter in the exhaust passage. In these cases, when the amount of the fuel mixed into the engine oil that is estimated by the mixed fuel amount estimating means is equal to or larger than a prescribed amount, the sub-fuel injection may be prohibited, and the filter recovery control may be performed by supplying the fuel from the fuel supply valve, instead of performing the sub-fuel injection.

The prescribed amount is the mixed fuel amount at or below which the degree of dilution of the engine oil caused by the fuel is in a permissible range. The prescribed amount is set in advance.

By supplying the fuel into exhaust gas from the fuel supply valve disposed in the aforementioned manner instead of performing the sub-fuel injection into the cylinder, it is possible to supply the fuel to the catalyst, thereby performing the filter recovery control. The sub-fuel injection is prohibited, and the filter recovery control is performed by supplying the fuel from the fuel supply valve, whereby it is possible to prevent the fuel from being newly mixed into the engine oil due to the filter recovery control. Thus, according to the aforementioned control, it is possible to suppress dilution of the engine oil caused by the filter recovery control.

Also, according to the invention, a load of the internal combustion engine may be decreased as the amount of the fuel mixed into the engine oil that is estimated by the mixed fuel amount estimating means increases. The load of the internal combustion engine is decreased, for example, by performing a control of changing a shift point of a transmission installed in the vehicle.

As the load of the internal combustion engine is decreased, the amount of the PM discharged from the internal combustion engine is decreased. As a result, the amount of the PM deposited in the filter is decreased.

Thus, according to the aforementioned control, even in the case where the performing frequency with which the filter recovery control is performed is decreased when the mixed fuel amount increases, or in the case where the performing period during which the filter recovery control is performed is decreased when the mixed fuel amount increases, it is possible to reduce the possibility that the amount of the PM deposited in the filter increases to an excessive amount.

According to the invention, the amount of the fuel mixed into the engine oil that is estimated by the mixed fuel amount estimating means may be reset when the engine oil is changed.

Further, when a running distance of a vehicle including the internal combustion engine after the engine oil is changed is longer than an engine oil change distance, at least one of the performing frequency with which the filter recovery control is performed and the performing period during which the filter recovery control is performed may be decreased, as compared to when the running distance is equal to or shorter than the engine oil change distance.

In the vehicle including the internal combustion engine, as the running distance after the engine oil is changed increases, the mixed fuel amount inevitably increases. Thus, according to the invention, when the running distance of the vehicle including the internal combustion engine after the engine oil is changed is longer than the engine oil change distance, at least one of the performing frequency with which the filter recovery control is performed and the performing period during which the filter recovery control is performed is decreased. The engine oil change distance is the running distance of the vehicle, at or below which the degree of dilution of the engine oil caused by the fuel is in a permissible range. The engine oil change distance is set in advance according to types of engine oil or the like. In the aforementioned exhaust gas control apparatus, when the mixed fuel amount increases to some extent, it is possible to decrease the amount of the fuel that is newly mixed into the engine oil due to the filter recovery control. Accordingly, as described above, it is possible to perform the filter recovery control while suppressing dilution of the engine oil caused by the fuel.

Also, according to the invention, when the running distance of the vehicle including the internal combustion engine after the engine oil is changed is longer than the engine oil change distance, a load of the engine may be decreased, as compared to when the running distance is equal to or shorter than the engine oil change distance. As described above, the load of the internal combustion engine is decreased, for example, by performing the control of changing the shift point of the transmission installed in the vehicle.

According to the control, when the running distance of the vehicle after the engine oil is changed is longer than the engine oil change distance, the amount of the PM deposited in the filter can be reduced. Therefore, even in the case where the performing frequency with which the filter recovery control is performed is decreased when the running distance of the vehicle is longer than the engine oil change distance, or in the case where the performing period during which the filter recovery control is performed is decreased when the running distance of the vehicle is longer than the engine oil change distance, it is possible to reduce the possibility that the amount of the PM deposited in the filter 11 increases to an excessive amount.

In the exhaust gas control apparatus for an internal combustion engine according to the invention, it is possible to perform the filter recovery control for oxidizing and removing the PM deposited in the filter provided in the exhaust passage of the internal combustion engine, while suppressing an increase in the degree of dilution of the engine oil caused by the fuel.

### BRIEF DESCRIPTION OF THE DRAWINGS

The above mentioned and other features, advantages, technical and industrial significance of this invention will be better understood by reading the following detailed description of exemplary embodiments of the invention, when considered in connection with the accompanying drawings, in which:
FIG 1 is a schematic diagram showing a configuration of an internal combustion engine and intake/exhaust systems thereof according to an embodiment of the invention;
FIG. 2 is a flowchart showing a filter recovery control routine according to a first embodiment of the invention; and
FIG. 3 is a schematic diagram showing a configuration of an internal combustion engine and intake/exhaust systems thereof according to a modified example of the first embodiment of the invention.

### DETAILED DESCRIPTION OF THE EXEMPLARY EMBODIMENTS

In the following description and accompanying drawings, the present invention will be described in more detail in terms of exemplary embodiments.

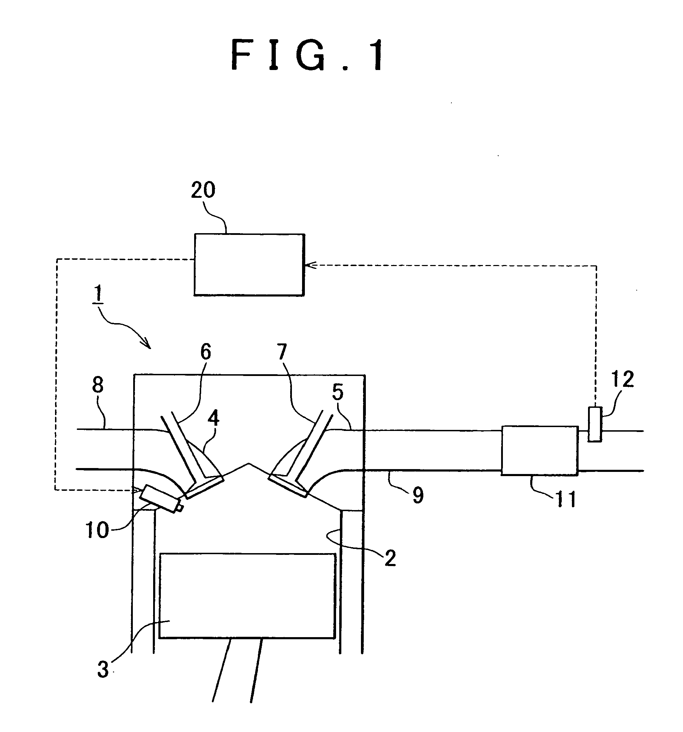

FIG. 1 is a schematic diagram showing a configuration of an internal combustion engine, and intake/exhaust systems thereof according to an embodiment of the invention. An internal combustion engine 1 is a diesel engine for driving a vehicle. A piston 3 is provided in a cylinder 2 of the internal combustion engine 1 so as to be slidable. An intake port 4 and an exhaust port 5 are connected to a combustion chamber in an upper portion of the cylinder 2. An opening portion of the intake port 4, which is opened to the combustion chamber, is opened/closed by an intake valve 6. An opening portion of the exhaust port 5, which is opened to the combustion chamber, is opened/closed by an exhaust valve 7. The intake port 4 and the exhaust port 5 are connected to an intake passage 8 and an exhaust passage 9, respectively. Also, a fuel injection valve 10 which directly injects fuel into the cylinder 2 is provided in the cylinder 2.

In the exhaust passage 9, a filter 11 that captures PM in exhaust gas is provided. The filter 11 supports an oxidation catalyst. Any catalyst may be supported by the filter 11 as long as the catalyst has an oxidizing function. For example, a NOx storage reduction catalyst may be supported by the filter 11. Also, the filter itself may not support the catalyst, and the catalyst may be provided at a portion upstream of the filter 11 in the exhaust passage 9. An exhaust gas temperature sensor 12 that outputs an electric signal corresponding to the temperature of exhaust gas is provided at a portion downstream of the filter 11 in the exhaust passage 9.

An ECU 20 is provided for controlling the internal combustion engine 1 having the configuration that has been described. The ECU 20 is connected to various sensors such as the exhaust gas temperature sensor 12 through electric wiring. Signals output from these sensors are input to the ECU 20. Also, the ECU 20 is electrically connected to the fuel injection valve 10. The ECU 20 controls the fuel injection valve 10.

Hereinafter, description will be made of the filter recovery control that is performed so as to oxidize and remove the PM deposited in the filter 11. An amount of PM deposited in the filter 11 (hereinafter, referred to as "PM deposition amount") is estimated based on, for example, an accumulated amount of fuel injected from the fuel injection valve 10. When the estimated PM deposition amount is equal to or larger than a recovery performing PM deposition amount Qpm that will be described later, the filter recovery control is performed in this embodiment. In the filter recovery control in this embodiment, after main fuel injection is performed by injecting fuel from the fuel injection valve 10 at timing in the vicinity of a top dead center during the compression stroke, sub-fuel injection is performed by additionally injecting fuel from the fuel injection valve 10 during an expansion stroke or an exhaust stroke. When the filter recovery control is performed, the fuel injected during the sub-fuel injection is supplied to the oxidation catalyst supported by the filter 11. Then, the temperature of the filter 11 is increased due to oxidation heat that is generated when the supplied fuel is oxidized in the oxidation catalyst. Thus, the PM deposited in the filter 11 is oxidized and removed. At this time, the temperature of the filter 11 is estimated based on a value detected by the exhaust gas temperature sensor 12. The amount of the fuel injected during the sub-fuel injection is controlled such that the estimated temperature of the filter 11 enters a predetermined temperature range in which the PM can be oxidized. Also, in a case where the filter recovery control is performed, when a recovery performing period Δtre that will be described later has elapsed since the filter recovery control is started, the sub-fuel injection is stopped, and the filter recovery control is stopped.

When the filter recovery control that has been described is performed, the sub-fuel injection is performed after the main fuel injection is performed, that is, at timing at which the piston 3 in the cylinder 2 is below the position in the vicinity of the top dead center. Therefore, the fuel injected during the sub-fuel injection is likely to adhere to the inner wall surface of the cylinder 2 as compared to the fuel injected during the main fuel injection. Accordingly, dilution of engine oil may be promoted by the fuel when the filter recovery control is performed.

Accordingly, in this embodiment, a performing frequency with which the filter recovery control is performed and a performing period during which the filter recovery control is performed are changed according to a degree of dilution of the engine oil caused by the fuel, that is, an amount of the fuel mixed into the engine oil (hereinafter, referred to as "mixed fuel amount Qf").

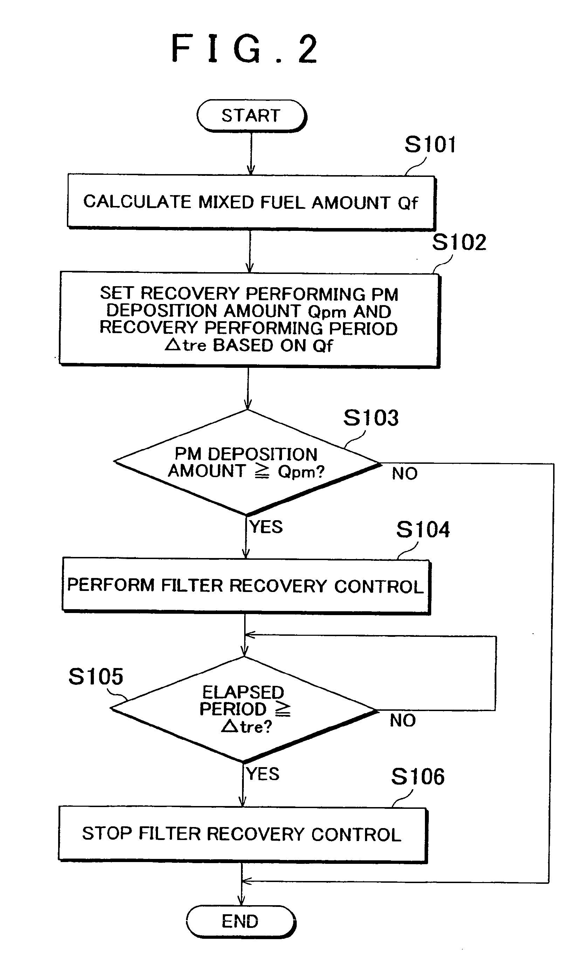

Next, the filter recovery control routine according to this embodiment will be described with reference to a flowchart shown in FIG 2. The routine is stored in the ECU 20 in advance. The routine is repeatedly performed at every prescribed crank angle while the internal combustion engine 1 is operated.

In this routine, first, in step S101, the ECU 20 calculates the mixed fuel amount Qf. As an example of a method of calculating the mixed fuel amount Qf, it is possible to employ the following method. A drop fuel amount, which is an amount of the fuel that adheres to the inner wall of the cylinder 2 and drops into an oil pan, is calculated in each of the last filter recovery control routine and the routines prior to the last routine, and an accumulated drop fuel amount is calculated by accumulating the drop fuel amounts. Further, when the filter recovery control is not performed, an evaporative fuel amount, which is an amount of the fuel evaporated from the engine oil, is calculated, and an accumulated evaporative fuel amount is calculated by accumulating the evaporative fuel amounts. Then, the mixed fuel amount Qf is calculated by subtracting the accumulated evaporative fuel amount from the accumulated drop fuel amount.

Next, in step S102, the ECU 20 sets the recovery performing PM deposition amount Qpm that is a threshold value of the PM deposition amount at which the filter recovery control is started, and the recovery performing period Δtre that is a period during which the filter recovery control is performed, based on the mixed fuel amount Qf.

The recovery performing PM deposition amount Qpm is set to be increased as the mixed fuel amount Qf increases. The performing frequency with which the filter recovery control is performed is decreased by increasing the recovery performing PM deposition amount Qpm. Also, the recovery performing period Δtre is set to be decreased as the mixed fuel amount Qf increases. The ECU 20 may store in advance a relationship between the mixed fuel amount Qf and the recovery performing PM deposition amount Qpm, and a relationship between the mixed fuel amount Qf and the recovery performing period Δtre in the form of a map, and the recovery performing PM deposition amount Qpm and the recovery performing period Δtre may be obtained using the map.

Next, in step S103, the ECU 20 determines whether the present PM deposition amount in the filter 11 is equal to or larger than the recovery performing PM deposition amount Qpm that is set in step S102. When an affirmative determination is made in step S103, the ECU 20 performs step S104. When a negative determination is made in step S103, the ECU 20 terminates the routine.

In step S104, the ECU 20 performs the filter recovery control by starting the sub-fuel injection from the fuel injection valve 10.

Next, in step S105, the ECU 20 determines whether a period that has elapsed since the filter recovery control is started is equal to or longer than the recovery performing period Δtre that is set in step S102. When an affirmative determination is made in step S105, the ECU 20 performs step S106. When a negative determination is made in step S105, the ECU 20 repeatedly performs step S105.

In step S106, the ECU 20 stops the filter recovery control, and terminates the routine.

According to the control routine that has been described, as the mixed fuel amount Qf increases, the performing frequency with which the filter recovery control is performed is decreased, and the performing period during which the filter recovery control is performed is decreased. As a result, as the mixed fuel amount Qf increases, the amount of the fuel that is newly mixed into the engine oil due to the filter recovery control is decreased. Accordingly, it is possible to perform the filter recovery control while suppressing dilution of the engine oil caused by the fuel.

The mixed fuel amount Qf that is calculated in the aforementioned routine is reset when the engine oil is changed.

In this embodiment, the filter recovery control is performed when the PM deposition amount in the filter 11 is equal to or larger than the recovery performing PM deposition amount Qpm. However, the filter recovery control may be performed at every prescribed time interval, or at every prescribed running distance. In the case where the filter recovery control is performed at every prescribed time interval, the prescribed time interval is set to be increased as the mixed fuel amount Qf increases. In the case where the filter recovery control is performed at every prescribed running distance, the prescribed running distance is set to be increased as the mixed fuel amount Qf increases. Thus, the performing frequency with which the filter recovery control is performed can be decreased as the mixed fuel amount Qf increases.

Also, in this embodiment, one of the recovery performing PM deposition amount Qpm and the recovery performing period Δtre may be set to a predetermined constant value, and only the other may be changed according to the mixed fuel amount Qf.

Further, in this embodiment, the amount of the fuel injected at each injection during the sub-fuel injection in the filter recovery control may be decreased in a case where the mixed fuel amount Qf is large when the filter recovery control is performed, as compared to a case where the mixed fuel amount Qf is small when the filter recovery control is performed.

As the amount of the fuel injected at each injection during the sub-fuel injection decreases, the amount of the fuel that is injected during the sub-fuel injection and adheres to the inner wall surface of the cylinder 2 decreases. Therefore, according to the aforementioned control, it is possible to decrease the amount of the fuel that is mixed into the engine oil due to the filter recovery control in the case where the mixed fuel amount Qf is large, as compared to the case where the mixed fuel amount Qf is small. That is, it is possible to suppress dilution of the engine oil caused by the filter recover control.

Even in the case where the amount of the fuel injected at each injection during the sub-fuel injection is decreased, the amount is set such that the temperature of the filter enters a temperature range in which the PM can be oxidized.

Also, in this embodiment, it is preferable that a load of the internal combustion engine 1 should be decreased, for example, by performing a control of changing a shift point of a transmission, as the mixed fuel amount Qf increases.

The PM deposition amount in the filter 11 can be reduced by decreasing the load of the internal combustion engine 1. Therefore, even in the case where the performing frequency with which the filter recovery control is performed is decreased when the mixed fuel amount Qf increases, or in the case where the performing period during which the filter recovery control is performed is decreased when the mixed fuel amount Qf increases, it is possible to reduce the possibility that the PM deposition amount in the filter 11 increases to an excessive amount.

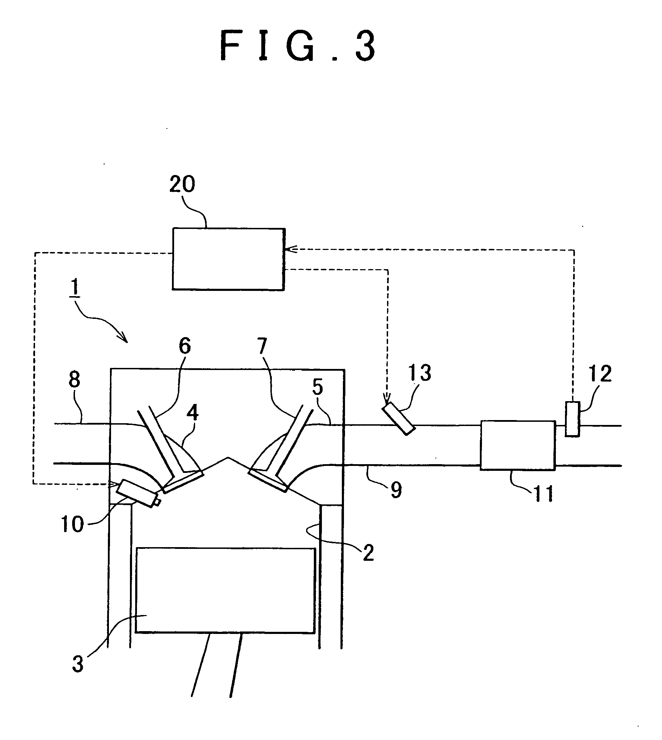

Hereinafter, a modified example of the embodiment will be described. FIG. 3 is a schematic diagram showing a configuration of an internal combustion engine and intake/exhaust systems thereof according to the modified example of the embodiment. In the configuration according to the modified example, a fuel supply valve 13 is provided at a portion upstream of the filter 11 in the exhaust passage 9. Since other portions of the configuration are the same as those in the configuration shown in FIG. 1, description thereof will be omitted. The fuel supply valve 13 is electrically connected to the ECU 20, and is controlled by the ECU 20.

In the case where the fuel supply valve 13 is provided as shown in FIG. 3, if the mixed fuel amount Qf is equal to or larger than a prescribed amount when the filter recovery control is performed, the sub-fuel injection is prohibited, and the fuel is supplied from the fuel supply valve 13 instead of performing the sub-fuel injection, whereby the filter recovery control is performed. The prescribed amount is the mixed fuel amount at or below which the degree of dilution of the engine oil caused by the fuel is in a permissible range. The prescribed amount is set in advance.

By supplying the fuel from the fuel supply valve 13 instead of performing the sub-fuel injection, it is possible to prevent the fuel from adhering to the inner wall surface of the cylinder 2. As a result, it is possible to prevent the fuel from being mixed into the engine oil due to the filter recovery control. Accordingly, it is possible to suppress dilution of the engine oil caused by the filter recovery control.

Hereinafter, a second embodiment of the invention will be described. Since an outline of a configuration of an internal combustion engine and intake/exhaust systems thereof in the second embodiment is the same as that in the first embodiment, description thereof will be omitted. In this embodiment, the ECU 20 counts a running distance of a vehicle including the internal combustion engine 1 after the engine oil is changed. When the running distance is longer than an engine oil change distance, the performing frequency with which the filter recovery control is performed is decreased, and the performing period during which the filter recovery control is performed is decreased, as compared to when the running distance is equal to or shorter than the engine oil change distance.

The engine oil change distance is the running distance of the vehicle, at or below which the degree of dilution of the engine oil caused by the fuel is in the permissible range. The engine oil change distance is set in advance according to types of engine oil or the like.

As the running distance after the engine oil is changed increases, the mixed fuel amount Qf inevitably increases. However, according to this embodiment, when the mixed fuel amount Qf increases to some extent, it is possible to decrease the amount of the fuel that is newly mixed into the engine oil due to the filter recovery control. Accordingly, it is possible to perform the filter recovery control while suppressing dilution of the engine oil caused by the fuel, as well as in the first embodiment.

In the second embodiment, the method of decreasing the performing frequency with which the filter recovery control is performed, and the method of decreasing the performing period during which the filter recovery control is performed are the same as those in the first embodiment. In the second embodiment as well, one of the performing frequency with which the filter recovery control is performed and the performing period during which the filter recovery control is performed may be set to a constant value, and only the other may be changed according to the running distance of the vehicle after the engine oil is changed.

Also, in the second embodiment, it is preferable that the load of the internal combustion engine 1 should be decreased when the running distance of the vehicle after the engine oil is changed is longer than the engine oil change distance, as compared to when the running distance is equal to or shorter than the engine oil change distance.

In this case, when the running distance of the vehicle after the engine oil is changed is longer than the engine oil change distance, the PM deposition amount in the filter 11 can be reduced. Therefore, even in the case where the performing frequency with which the filter recovery control is performed is decreased when the running distance of the vehicle is longer than the engine oil change distance, or in the case where the performing period during which the filter recovery control is performed is decreased when the running distance of the vehicle is longer than the engine oil change distance, it is possible to reduce the possibility that the PM deposition amount in the filter 11 increases to an excessive amount

## Claims

1. An exhaust gas control apparatus for an internal combustion engine, including:
a particulate filter (11) which is provided in an exhaust passage (9) of an internal combustion engine (1), and which captures particulate matter in exhaust gas;
a catalyst having an oxidizing function which is provided at a portion upstream of the particulate filter (11) in the exhaust passage (9), or a catalyst having an oxidizing function which is supported by the particulate filter (11); and
control means (20) for performing a filter recovery control, in which fuel is supplied to the catalyst by performing sub-fuel injection into a cylinder (2) of the internal combustion engine (1) after main fuel injection is performed, whereby a temperature of the particulate filter (11) is increased, and the particulate matter deposited in the particulate filter (11) is oxidized and removed,
**characterized in that**
the exhaust gas control apparatus further includes mixed fuel amount estimating means (20) for estimating an amount of fuel (Qf) mixed into engine oil, which causes dilution of the engine oil; and
the control means (20) change at least one of a performing frequency with which the filter recovery control is performed and a performing period (Δtre) during which the filter recovery control is performed according to the estimated amount of fuel (Qf).

2. The exhaust gas control apparatus for an internal combustion engine according to claim 1, wherein as the the estimated amount of fuel (Qf) increases, the control means_(20) decrease at least one of the performing frequency with which the filter recovery control is performed and the performing period (Δtre) during which the filter recovery control is performed.

3. The exhaust gas control apparatus for an internal combustion engine according to claim 2, wherein when the estimated amount of fuel (Qf) is large, the control means (20) decrease an amount of the fuel injected at each injection during the sub-fuel injection, as compared to when the amount of the estimated amount of fuel (Qf) is small.

4. The exhaust gas control apparatus for an internal combustion engine according to claim 2, wherein
in the case where the catalyst is provided in the exhaust passage (9), a fuel supply valve (13) for supplying fuel is provided at a portion upstream of the catalyst in the exhaust passage (9), and in the case where the catalyst is supported by the particulate filter (11), the fuel supply valve (13) is provided at a portion upstream of the particulate filter (11) in the exhaust passage (9); and
when the estimated amount of fuel (Qf) is equal to or larger than a prescribed amount, the sub-fuel injection is prohibited, and the control means (20) perform filter recovery control by supplying the fuel from the fuel supply valve (13), instead of performing the sub-fuel injection.

5. The exhaust gas control apparatus for an internal combustion engine according to any one of claim 2 through 4, wherein a load of the internal combustion engine (1) is decreased as estimated amount of fuel (Qf) increases.

6. The exhaust gas control apparatus for an internal combustion engine according to any one of claim 2 through 5, wherein the estimated amount of fuel (Qf) is reset when the engine oil is changed.

7. The exhaust gas control apparatus for an internal combustion engine according to claim 2, wherein when a running distance of a vehicle including the internal combustion engine (1) after the engine oil is changed is longer than an engine oil change distance, the control means (20) decrease at least one of the performing frequency with which the filter recovery control is performed and the performing period (Δtre) during which the filter recovery control is performed, as compared to when the running distance is equal to or shorter than the engine oil change distance.

8. The exhaust gas control apparatus for an internal combustion engine according to claim 7, wherein when the running distance of the vehicle including the internal combustion engine (1) after the engine oil is changed is longer than the engine oil change distance, a load of the internal combustion engine (1) is decreased, as compared to when the running distance is equal to or shorter than the engine oil change distance.

9. The exhaust gas control apparatus for an internal combustion engine according to claim 5 or 8, wherein the load of the internal combustion engine (1) is decreased by performing a control of changing a shift point of a transmission installed in the vehicle.

## Patentansprüche

1. Abgassteuerungsvorrichtung für einen Verbrennungsmotor, mit:
einem Partikelfilter (11), der sich in einem Auspuffkanal (9) eines Verbrennungsmotors (1) befindet und Partikel im Abgas einfängt,
einem Katalysator mit Oxidationsfunktion, der sich im Auspuffkanal (9) an einem Abschnitt stromaufwärts vom Partikelfilter (11) befindet, oder einem Katalysator mit Oxidationsfunktion, der vom Partikelfilter (11) getragen wird; und
einer Steuerungseinrichtung (20) zur Durchführung einer Filterwiederherstellungssteuerung, bei der dem Katalysator Kraftstoff zugeführt wird, indem in einem Zylinder (2) des Verbrennungsmotors (1) nach Durchführung einer Kraftstoffhaupteinspritzung eine Kraftstoffnebeneinspritzung durchgeführt wird, wodurch eine Temperatur des Partikelfilters (11) erhöht wird und die im Partikelfilter (11) abgelagerten Partikel oxidiert und entfernt werden,
**dadurch gekennzeichnet, dass**
die Abgassteuerungsvorrichtung außerdem eine Kraftstoffeinmischmengenschätzeinrichtung (20) zum Schätzen einer in Motoröl eingemischten Kraftstoffmenge (Qf) enthält, die eine Verdünnung des Motoröls bewirkt; und
die Steuerungseinrichtung (20) gemäß der geschätzten Kraftstoffmenge (Qf) die Durchführungshäufigkeit, mit der die Filterwiederherstellungssteuerung durchgeführt wird, und/oder die Durchführungsdauer (Δtre), während der die Filterwiederherstellungssteuerung durchgeführt wird, ändert.

2. Abgassteuerungsvorrichtung für einen Verbrennungsmotor nach Anspruch 1, bei der die Steuerungseinrichtung (20) mit zunehmender geschätzter Kraftstoffmenge (Qf) die Durchführungshäufigkeit, mit der die Filterwiederherstellungssteuerung durchgeführt wird, und/oder die Durchführungsdauer (Δtre), während der die Filterwiederherstellungssteuerung durchgeführt wird, verringert.

3. Abgassteuerungsvorrichtung für einen Verbrennungsmotor nach Anspruch 2, bei der die Steuerungseinrichtung (20) die Kraftstoffmenge, die bei jeder Einspritzung während der Kraftstoffnebeneinspritzung eingespritzt wird, bei einer hohen geschätzten Kraftstoffmenge (Qf) verglichen mit einer geringen Menge der geschätzten Kraftstoffmenge (Qf) verringert.

4. Abgassteuerungsvorrichtung für einen Verbrennungsmotor nach Anspruch 2, bei der
sich, falls sich der Katalysator im Auspuffkanal (9) befindet, im Auspuffkanal (9) an einem Abschnitt stromaufwärts vom Katalysator ein Kraftstoffzuführungsventil (13) zur Kraftstoffzuführung befindet und sich, falls der Katalysator vom Partikelfilter (11) getragen wird, das Kraftstoffzuführungsventil (13) im Auspuffkanal (9) an einem Abschnitt stromaufwärts vom Partikelfilter (11) befindet; und
die Kraftstoffnebeneinspritzung verhindert wird, wenn die geschätzte Kraftstoffmenge (Qf) größer oder gleich einer vorgeschriebenen Menge ist, und die Steuerungseinrichtung (20), statt die Kraftstoffnebeneinspritzung durchzuführen, die Filterwiederherstellungssteuerung durchführt, indem sie vom Kraftstoffzuführungsventil (13) aus Kraftstoff zuführt.

5. Abgassteuerungsvorrichtung für einen Verbrennungsmotor nach einem der Ansprüche 2 bis 4, bei der die Last des Verbrennungsmotors (1) mit zunehmender geschätzter Kraftstoffmenge (Qf) verringert wird.

6. Abgassteuerungsvorrichtung für einen Verbrennungsmotor nach einem der Ansprüche 2 bis 5, bei der die geschätzte Kraftstoffmenge (Qf) zurückgesetzt wird, wenn das Motoröl gewechselt wird.

7. Abgassteuerungsvorrichtung für einen Verbrennungsmotor nach Anspruch 2, bei der die Steuerungseinrichtung (2), wenn die Fahrdistanz eines den Verbrennungsmotor (1) enthaltenden Fahrzeugs nach einem Wechsel des Motoröls größer als eine Distanz für den Motorölwechsel ist, die Durchführungshäufigkeit, mit der die Filterwiederherstellungssteuerung durchgeführt wird, und/oder die Durchführungsdauer (Δtre), während der die Filterwiederherstellungssteuerung durchgeführt wird, verglichen mit einer Fahrdistanz, die kürzer als oder gleich lang wie die Distanz für den Motorölwechsel ist, verringert.

8. Abgassteuerungsvorrichtung für einen Verbrennungsmotor nach Anspruch 7, bei der, wenn die Fahrdistanz des den Verbrennungsmotor (1) enthaltenen Fahrzeugs nach dem Wechsel des Motoröls länger als die Distanz für den Motorölwechsel ist, die Last des Verbrennungsmotors (1) verglichen mit einer Fahrdistanz, die kürzer als oder gleich lang wie die Distanz für den Motorölwechsel ist, verringert wird.

9. Abgassteuerungsvorrichtung für einen Verbrennungsmotor nach Anspruch 5 oder 8, bei der die Last des Verbrennungsmotors (1) verringert wird, indem eine Steuerung durchgeführt wird, bei der ein Schaltpunkt eines im Fahrzeug eingebauten Getriebes geändert wird.

## Revendications

1. Dispositif de commande des gaz d'échappement pour un moteur à combustion interne, incluant :
un filtre à particules (11) qui est pourvu dans un passage d'échappement (9) d'un moteur à combustion interne (1), et qui capte des matières particulaires dans des gaz d'échappement ;
un catalyseur ayant une fonction d'oxydation qui est pourvu au niveau d'une portion en amont du filtre à particules (11) dans le passage d'échappement (9), ou un catalyseur ayant une fonction d'oxydation qui est supporté par le filtre à particules (11) ; et
un moyen de commande (20) pour exécuter une commande de rétablissement de filtre, dans lequel du carburant est alimenté au catalyseur en exécutant une injection de sous-carburant dans un cylindre (2) du moteur à combustion interne (1) après qu'une injection de carburant principale est exécutée, grâce à quoi une température du filtre à particules (11) est augmentée, et les matières particulaires déposées dans le filtre à particules (11) sont oxydées et enlevées,
**caractérisé en ce que**
le dispositif de commande des gaz d'échappement inclut en plus un moyen d'estimation de quantité de carburant mélangé (20) pour estimer une quantité de carburant (Qf) mélangé dans une huile moteur, qui cause une dilution de l'huile moteur ; et
le moyen de commande (20) change au moins l'une d'une fréquence d'exécution avec laquelle la commande de rétablissement du filtre est exécutée et une période d'exécution (Δtre) durant laquelle la commande de rétablissement du filtre est exécutée selon la quantité estimée de carburant (Qf).

2. Dispositif de commande des gaz d'échappement pour un moteur à combustion interne selon la revendication 1, dans lequel à mesure que la quantité estimée de carburant (Qf) augmente, le moyen de commande (20) diminue au moins l'une de la fréquence d'exécution avec laquelle la commande de rétablissement du filtre est exécutée et la période d'exécution (Δtre) durant laquelle la commande de rétablissement du filtre est exécutée.

3. Dispositif de commande des gaz d'échappement pour un moteur à combustion interne selon la revendication 2, dans lequel lorsque la quantité estimée de carburant (Qf) est grande, le moyen de commande (20) diminue une quantité du carburant injecté à chaque injection durant l'injection de sous-carburant, en comparaison au moment où la quantité de la quantité estimée de carburant (Qf) est petite.

4. Dispositif de commande des gaz d'échappement pour un moteur à combustion interne selon la revendication 2, dans lequel
dans le cas où le catalyseur est pourvu dans le passage d'échappement (9), une soupape d'alimentation de carburant (13) pour alimenter du carburant est pourvue au niveau d'une portion en amont du catalyseur dans le passage d'échappement (9), et dans le cas où le catalyseur est supporté par le filtre à particules (11), la soupape d'alimentation de carburant (13) est pourvue au niveau d'une portion en amont du filtre à particules (11) dans le passage d'échappement (9) ; et
lorsque la quantité estimée de carburant (Qf) est égale à ou plus grande qu'une quantité prescrite, l'injection de sous-carburant est prohibée, et le moyen de commande (20) exécute une commande de rétablissement de filtre en alimentant le carburant depuis la soupape d'alimentation de carburant (13), au lieu d'exécuter l'injection de sous-carburant.

5. Dispositif de commande des gaz d'échappement pour un moteur à combustion interne selon l'une quelconque des revendications 2 à 4, dans lequel une charge du moteur à combustion interne (1) est diminuée à mesure qu'une quantité estimée de carburant (Qf) augmente.

6. Dispositif de commande des gaz d'échappement pour un moteur à combustion interne selon l'une quelconque des revendications de 2 à 5, dans lequel la quantité estimée de carburant (Qf) est réinitialisée lorsque l'huile moteur est changée.

7. Dispositif de commande des gaz d'échappement pour un moteur à combustion interne selon la revendication 2, dans lequel lorsqu'une distance de déplacement d'un véhicule incluant le moteur à combustion interne (1) après que l'huile moteur est changée est plus longue qu'une distance de changement d'huile moteur, le moyen de commande (20) diminue au moins l'une de la fréquence d'exécution avec laquelle la commande de rétablissement du filtre est exécutée et la période d'exécution (Δtre) durant laquelle la commande de rétablissement du filtre est exécutée, en comparaison au moment où la distance de déplacement est égale à ou plus courte que la distance de changement d'huile moteur.

8. Dispositif de commande des gaz d'échappement pour un moteur à combustion interne selon la revendication 7, dans lequel lorsque la distance de déplacement du véhicule incluant le moteur à combustion interne (1) après que l'huile moteur est changée est plus longue que la distance de changement d'huile moteur, une charge du moteur à combustion interne (1) est diminué, en comparaison au moment où la distance de déplacement est égale à ou plus courte que la distance de changement d'huile moteur.

9. Dispositif de commande des gaz d'échappement pour un moteur à combustion interne selon la revendication 5 ou 8, dans lequel la charge du moteur à combustion interne (1) est diminuée en exécutant une commande de changement d'un point de changement de vitesse d'une transmission installée dans le véhicule.
